# EUROPEAN PATENT APPLICATION

(11) **EP 4 611 166 A1**
(43) Date of publication of application: **03.09.2025**
(21) Application number: 23900863.4
(22) Date of filing: 11.10.2023
(51) Int. Cl.: H01M 50/578, H01M 50/198, H01M 50/184, H01M 50/19, H01M 50/105, H01M 50/178

(54) **POUCH CELL**

(30) Priority: 09.12.2022 KR 20220171496; 06.04.2023 KR 20230045409
(71) Applicant: LG Energy Solution, Ltd., Seoul 07335 (KR)
(72) Inventor: LEE, Yu Jin, Daejeon 34122 (KR); KIM, Sang Hun, Daejeon 34122 (KR); PARK, Eun Suk, Daejeon 34122 (KR)
(74) Representative: Plasseraud IP
(86) International application number: PCT/KR2023/015633
(87) International publication number: WO 2024/122842

(57) **Abstract**

The present invention relates to a pouch cell in which a gas inside a pouch is discharged to the outside of the pouch to delay or prevent an occurrence of a venting phenomenon of the pouch by the internal gas occurring in a charging or discharging process of the pouch cell.

The pouch cell includes an electrode assembly, a pouch configured to accommodate the electrode assembly, an electrode lead electrically connected to the electrode assembly to protrude to the outside of the pouch, a pair of lead films including a central portion, which covers a portion of the electrode lead on each of both surfaces of the electrode lead, and an outer portion disposed on each of both sides of the central portion so that the pouch and the electrode lead are insulated from each other, and a passage member disposed between the pair of lead films and attached to the outer portion, wherein, when a pressure inside the pouch increases above a set pressure, a gas moving path is provided between the passage member and each of the lead films.

## Description

### TECHNICAL FIELD

### CROSS-REFERENCE TO RELATED APPLICATION

The present application claims the benefit of the priority of Korean Patent Application Nos. 10-2022-0171496, filed on December 9, 2022, and 10-2023-0045409, filed on April 6, 2023, which are hereby incorporated by reference in their entirety.

### TECHNICAL FIELD

The present invention relates to a battery cell, and more particularly, to a secondary battery pouch cell that is chargeable or dischargeable.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

The electrolyte together with the electrode assembly may be accommodated inside the pouch of the pouch cell. Here, residual moisture in the electrolyte inside the pouch of the pouch cell or moisture permeated from the outside may react with lithium salt to generate hydrogen fluoride (HF), and carbon dioxide, carbon monoxide, ethylene, methane, etc. of gas may be generated due to decomposition of the electrolyte. In addition, depending on materials of the positive electrode provided in the electrode assembly of the pouch cell, hydrogen and HF may be additionally generated to lead to overheating due to overcharge and internal short-circuit during the charging and discharging process. Thus, a large amount of gas may be generated inside the pouch. Due to such the gas, a pressure inside the pouch may increase, and the increasing pressure may cause swelling, in which the pouch is swelled, or venting in which a portion of the pouch is burst.

In the pouch cell according to the related art, the pressure increases due to the internal gas, and sealing of a sealed portion is damaged due to the increasing pressure. In addition, there is a problem in that the decrease in sealability of the sealed portion causes a venting phenomenon in which the pouch is opened by the pressure.

Since the pouch cell in which the venting phenomenon occurs may not function as a secondary battery, the pouch cell including a configuration in which the gas inside the pouch is discharged to the outside of the pouch to prevent or delay the occurrence of the venting phenomenon.

### DISCLOSURE OF THE INVENTION

### TECHNICAL PROBLEM

An object of the present invention is to provide a pouch cell in which a gas inside a pouch is discharged to the outside of the pouch to delay or prevent an occurrence of a venting phenomenon of the pouch by the internal gas occurring in a charging or discharging process of the pouch cell.

### TECHNICAL SOLUTION

A pouch cell includes an electrode assembly, a pouch configured to accommodate the electrode assembly, an electrode lead electrically connected to the electrode assembly to protrude to the outside of the pouch, a pair of lead films including a central portion, which covers a portion of the electrode lead on each of both surfaces of the electrode lead, and an outer portion disposed on each of both sides of the central portion so that the pouch and the electrode lead are insulated from each other, and a passage member disposed between the pair of lead films and attached to the outer portion, wherein, when a pressure inside the pouch increases above a set pressure, a gas moving path is provided between the passage member and each of the lead films.

The pouch may be configured to cover a portion of the lead film and a portion of the passage member.

One end of the lead film in a width direction may be spaced an interval from the pouch, and the passage member may be disposed to be spaced an interval from the one end.

The passage member may be disposed to be spaced apart from the electrode lead.

The passage member may be disposed to be spaced an interval from each of both ends in a longitudinal direction of the lead film.

A cross-sectional area of a portion at which the outer portion overlaps the passage member may be 10% or more to 90% or less of a cross-sectional area of the outer portion.

At least one of the pair of lead films may be coated with a fluorine-based resin at a portion overlapping the passage member on one surface facing the passage member.

At least one of the pair of lead films may be coated with a fluorine-based resin at a portion overlapping the passage member on one surface facing the passage member, and surface roughness of the portion overlapping the passage member may be greater than that of a portion that is not in contact with the passage member.

A portion overlapping the passage member may be plasma-treated or primer-treated so that the surface roughness is greater than that of the portion that is not in contact with the passage member.

At least one of the pair of lead films may have surface roughness (R) of 20 nm or more and 140 nm or less at a portion overlapping the passage member on one surface facing the passage member.

At least one of the pair of lead films may have a surface having surface roughness (R) of 20 nm or more and 140 nm or less, which is coated with a fluorine-based resin.

The passage member may include a fluorine-based resin.

The fluorine-based resin may include polytetrafluoroethylene (PTFE).

### ADVANTAGEOUS EFFECTS

The pouch cell according to the present invention may include the electrode assembly, the pouch accommodating the electrode assembly, the electrode lead electrically connected to the electrode assembly to protrude to the outside of the pouch, the pair of lead films including the central portion, which covers the portion of the electrode lead on each of both the surfaces of the electrode lead, and the outer portion disposed on each of both the sides of the central portion so that the pouch and the electrode lead are insulated from each other, and the passage member disposed between the pair of lead films and attached to the outer portion, wherein, when the pressure inside the pouch increases above the set pressure, the gas moving path may be provided between the passage member and each of the lead films.

Therefore, the gas inside the pouch generated during the charging or discharging process of the pouch cell may be discharged to the outside.

Thus, the safety of the pouch cell may be improved by delaying or preventing the venting phenomenon of the pouch from occurring due to the gas inside the pouch.

In addition, the adhesion between the lead film and the electrode lead may be prevented from being weakened.

In addition, the safety of the pouch cell may be improved by preventing the moisture from permeated into the electrode lead through the lead film.

The effects of the prevent invention are not limited by the aforementioned description, and thus, more varied effects are involved in this specification.

### BRIEF DESCRIPTION OF THE DRAWINGS

FIG. 1 is a schematic perspective view of a pouch cell according to Embodiment 1 of the present invention.
FIG. 2 is a schematic plan view illustrating a configuration when a portion of the pouch cell is viewed from the top according to Embodiment 1 of the present invention.
FIG. 3 is a schematic cross-sectional view of the pouch cell, taken along A-A' of FIG. 2 according to Embodiment 1 of the present invention.
FIG. 4 is a schematic cross-sectional view of the pouch cell, which is provided with a gas moving path and taken along A-A' of FIG. 2 according to Embodiment 1 of the present invention.
FIG. 5 is a schematic cross-sectional view of a pouch cell, taken along A-A' of FIG. 2 according to Embodiment 2 of the present invention.
FIG. 6 is a schematic cross-sectional view of the pouch cell, which is provided with a gas moving path and taken along A-A' of FIG. 2 according to Embodiment 2 of the present invention.
FIG. 7 is a schematic cross-sectional view of a pouch cell, taken along A-A' of FIG. 2 according to Embodiment 3 of the present invention.
FIG. 8 is a schematic cross-sectional view of a pouch cell, taken along A-A' of FIG. 2 according to Embodiment 4 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

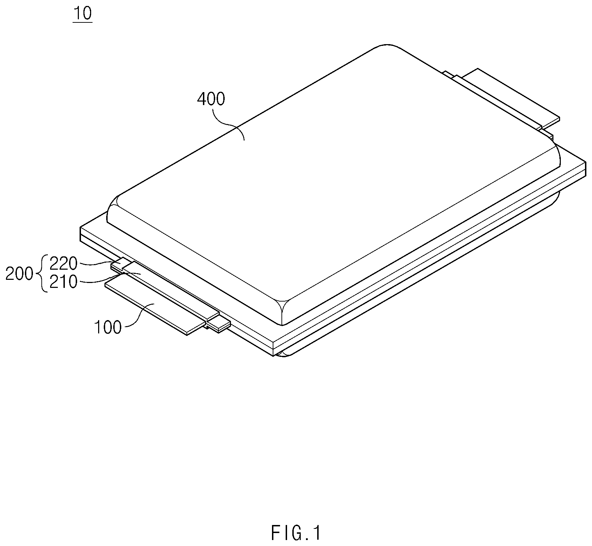

FIG. 1 is a schematic perspective view of a pouch cell 10 according to Embodiment 1 of the present invention.

The pouch cell 10 according to Embodiment 1 of the present invention may include an electrode assembly 500, a pouch 400, an electrode lead 100, a lead film 200, and a passage member 300.

The pouch cell 10 described in the present invention may refer to a secondary battery capable of charging and discharging. Specifically, the pouch cell 10 may refer to a secondary battery in which the electrode assembly 500 including a negative electrode, a positive electrode, and a separator is disposed inside the pouch 400, and the pouch 400 surrounds the electrode assembly 500. Specifically, the pouch cell 10 may refer to a secondary battery in which an electrode assembly 500 including a negative electrode, a positive electrode, and a separator is accommodated together with an electrolyte inside the pouch 400.

The electrode assembly 500 may have a stacked form of a negative electrode, a positive electrode, and a separator or a rolled jelly-roll form, and the pouch 400 may accommodate the electrode assembly 500. Specifically, the pouch 400 may include a cup part molded to accommodate the electrode assembly 500 and the electrolyte therein.

The electrode lead 100 may be electrically connected to the electrode assembly 500 and may be disposed to protrude to the outside of the pouch 400. The pouch cell 10 may provide electrical energy to the outside by the electrode lead 100 protruding to the outside of the pouch 400. Thus, the electrode lead 100 may be a conductor.

The lead film 200 may cover the electrode lead 100 so that the pouch 400 and the electrode lead 100 are insulated from each other. Specifically, the lead film 200 may be disposed on each of both surfaces of the electrode lead 100 to cover the electrode lead 100. The lead film 200 may be provided in a pair and disposed on each of both surfaces of the electrode lead 100.

The lead film 200 may include an insulating material to insulate the pouch 400 and the electrode lead 100 from each other. The electrode lead 100 may have a substantially rectangular parallelepiped shape, but is not limited thereto.

The lead film 200 according to Embodiment 1 of the present invention may include a central portion 210 and an outer portion 220. Specifically, the central portion 210 of the lead film 200 may be disposed at a position corresponding to a position of the electrode lead 100 to cover the electrode lead 100, and the outer portion 220 may be disposed at each of both sides of the central portion 210. Thus, the central portion 210 may be in contact with the electrode lead 100, and the outer portion 220 may not be in contact with the electrode lead 100.

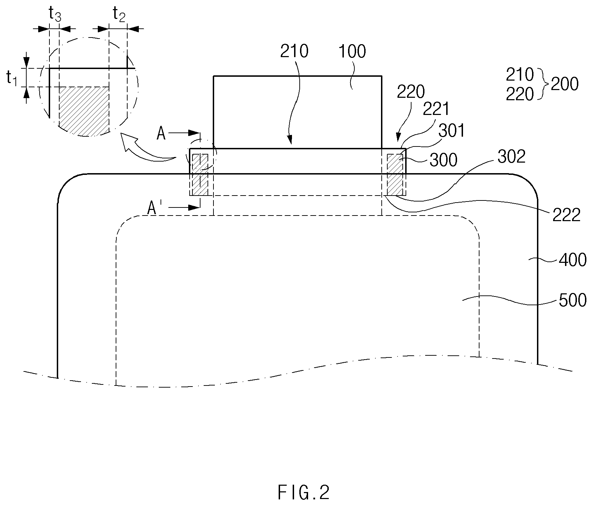

FIG. 2 is a schematic plan view illustrating a configuration when a portion of the pouch cell 10 is viewed from the top according to Embodiment 1 of the present invention.

As the pouch cell 10 is repeatedly charged and discharged, a gas may be generated, and thus, a pressure inside the pouch 400 may increase. When the pressure inside the pouch 400 increases excessively, a venting phenomenon may occur, and thus, the pouch cell 10 may lose its function. As an example of the configuration for preventing the increase in pressure inside the pouch 400, the pouch cell 10 according to Embodiment 1 of the present invention may include the passage member 300.

Referring to FIG. 2, the passage member 300 may be disposed between the pair of lead films 200. That is, the lead film 200 may be disposed on each of both surfaces of the passage member 300. Regarding the specific location, the passage member 300 may be disposed on the outer portion 220 of the lead film 200. Here, the passage member 300 may be disposed on one of the pair of outer portions 220 or may be disposed on each of the pair of outer portions 220.

Since the passage member 300 is disposed on the outer portion 220 of the lead film 200, the passage member 300 may not interfere with adhesion between the lead film 200 and the electrode lead 100. Thus, the pouch cell 10 may not be concerned about weakening of adhesive force between the lead film 200 and the electrode lead 100 even if the passage member 300 is disposed.

The adhesive force between the passage member 300 and the lead film 200 may be weaker than adhesive force between the lead films 200. In this regard, the passage member 300 may contain a fluorine-based resin to weaken the adhesive force with the lead film 200. For example, the fluorine-based resin may be polytetrafluoroethylene (PTFE). In addition, the fluorine-based resin may include PFA, PFEP, ETFE, PVDF, etc.

Since the adhesive force of the portion at which the passage member 300 is disposed is weaker than that when the lead films 200 are bonded to each other, the adhesion between the passage member 300 and the lead film 200 may be broken even at a relatively low pressure. Thus, when the pressure inside the pouch 400 increases above a specific pressure, a space may be defined between the passage member 300 and the lead film 200. That is, when the pressure inside the pouch 400 increases above a set pressure, a gas moving path 230 may be provided between the passage member 300 and the lead film 200. The gas inside the pouch 400 may move through the gas moving path 230 provided between the passage member 300 and the lead film 200, and the moving gas may pass through the lead film 200 and then be discharged to the outside of the pouch 400. Here, the gas may pass through the lead film 200 through diffusion.

Since the pouch cell 10 according to Embodiment 1 of the present invention includes the passage member 300, the gas inside the pouch 400 may be efficiently discharged to the outside. In addition, as a result, an occurrence of venting, etc. may be delayed or prevented to improve stability of the pouch cell 10.

A shape of the passage member 300 may vary. Preferably, the passage member 300 may have a substantially rectangular cross-section so that the constant gas moving path 230 is provided in a longitudinal direction of the passage member 300. The gas may move stably through the gas moving path 230 having a certain width.

During a process of manufacturing the pouch cell 10, the pouch 400 may be sealed to seal a portion of the opened pouch 400. Here, the pouch 400 may be sealed by heat and a pressure after a portion of the electrode lead 100, a portion of the lead film 200, and a portion of the passage member 300 are disposed therein. Thus, the pouch 400 may cover a portion of the electrode lead 100, a portion of the lead film 200, and a portion of the passage member 300.

Hereinafter, the arrangement of the passage member 300 will be described in more detail.

Referring to FIG. 2, one end 221 of the lead film 200 may be spaced apart from the pouch 400 in a width direction, and the other end 222 may be covered by the pouch 400. In FIG. 2, the width direction of the lead film 200 may refer to a vertical direction. Here, the passage member 300 may be disposed to be spaced an interval t1 from the one end 221 of the lead film 200 disposed to be spaced apart from the pouch 400. Specifically, the one end 301 of the passage member 300 that is not covered by the pouch 400 may be disposed to be spaced a specific interval t1 from the one end 221 of the outer portion 220 of the lead film 200 that is disposed relatively far from the pouch 400.

On the other hand, the passage member 300 may be disposed on the same line as the other end 222 of the lead film 200 covered by the pouch 400. Specifically, the other end 302 of the passage member 300 covered by the pouch 400 may be disposed on the same line as the other end 222 of the outer portion 220 of the lead film 200.

When the one end 301 of the passage member 300 is disposed on the same line as the one end 221 of the lead film 200, if an internal pressure of the pouch 400 becomes more than the set pressure, the passage member 300 and the lead film 200 may be opened to the outside. Therefore, in this case, a gas may not be discharged through transmission of the lead film 200, and even the electrolyte may leak to the outside of the pouch 400. The one end 301 of the passage member 300 may be disposed to be spaced the interval t1 from the one end 221 of the lead film 200, and thus, the above problem may be prevented.

In addition, if the other end 302 of the passage member 300 is not disposed on the same line as the other end 222 of the lead film 200, the opened portion between the passage member 300 and the lead film 200 and the inside of the pouch 400 may be difficult to be connected to each other. Since there is a portion at which the lead films 200 adhere to each other between the opened portion and the inside of the pouch 400, even if the internal pressure of the pouch 400 exceeds the set pressure, the opened portion and the inside of the pouch 400 may be blocked. The other end 302 of the passage member 300 may be disposed on the same line as the other end 222 of the lead film 200, the above problem may be prevented.

In summary, for smooth gas discharge through the transmission, the passage member 300 may have one end 301 that is spaced apart from the one end 221 of the lead film 200 and the other end 302 that is disposed on the same line as the other end 222 of the lead film 200.

Referring to FIG. 2, the passage member 300 according to Embodiment 1 of the present invention may be disposed to be spaced apart from the electrode lead 100. Specifically, a predetermined interval t2 may be provided between the electrode lead 100 and the passage member 300. That is, the passage member 300 may be disposed to be spaced apart from the central portion 210 of the lead film 200.

Since the passage member 300 is disposed to be spaced apart from the electrode lead 100, the adhesion between the electrode lead 100 and the lead film 200 may not be disturbed by the passage member 300.

The passage member 300 according to Embodiment 1 of the present invention may be disposed to be spaced an interval t3 from each of both ends of the lead film 200 in the longitudinal direction. Here, the longitudinal direction of the lead film 200 may refer to a horizontal direction with respect to FIG. 2.

The reason for disposing the passage member 300 may be the same as the reason why one end of the lead film 200 in the width direction described above is disposed to be spaced a distance t1 from the passage member 300. That is, if the passage member 300 is not disposed so as to be spaced a gap t3 from each of both ends in the longitudinal direction of the lead film 200, a gas may not be discharged through the transmission through the lead film 200, and the electrolyte may leak to the outside of the pouch 400.

Due to the arrangement of the passage member 300 discussed so far, it may be expected that a cross-sectional area of the passage member 300 may be less than that of the outer portion 220. In this regard, if the cross-sectional area occupied by the passage member 300 is explained in terms of ratio, the cross-sectional area of the passage member 300 may be 10% or more and 90% or less of the cross-sectional area of the outer portion 220.

If the cross-sectional area of the passage member 300 is less than 10% of the cross-sectional area of the outer portion 220, there is a risk that the gas discharge performance of the pouch cell 10 may be excessively weakened due to an insufficient space for the gas moving path 230 to be defined.

In addition, if the cross-sectional area of the passage member 300 exceeds 90% of the cross-sectional area of the outer portion 220, there is a risk that sealing strength of the outer portions 220 facing each other may be lowered. In this case, there is a risk that sealing properties of the lead film 200 are weakened due to the weakening of the sealing strength.

Preferably, the cross-sectional area of the passage member 300 may be 30% to 70% of the cross-sectional area of the outer portion 220. This may be a value that takes into account both the gas discharge performance and the sealability of the pouch cell 10.

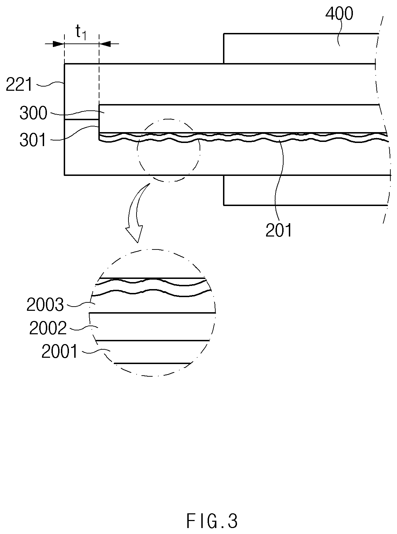

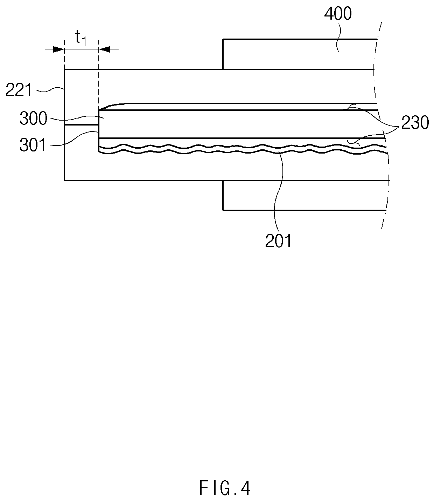

FIG. 3 is a schematic cross-sectional view of the pouch cell 10, taken along A-A' of FIG. 2 according to Embodiment 1 of the present invention, and FIG. 4 is a schematic cross-sectional view of the pouch cell 10, which is provided with the gas moving path and taken along A-A' of FIG. 2 according to Embodiment 1 of the present invention.

The lead film 200 may have a three-layered structure. The lead film 200 may include a pouch adhesion layer 2001 disposed at a portion that is in contact with the pouch 400 for adhesion to the pouch 400. In addition, the lead film 200 may include a metal adhesion layer 2003 disposed on a portion that is in contact with the opposite lead film 200 or the electrode lead 100. In addition, the lead film 200 may include a core layer 2002 disposed between the pouch adhesion layer 2001 and the metal adhesion layer 2003. This is merely one example, and the lead film 200 may include other configurations.

As an example of the configuration to prevent moisture, etc. from being permeated into the pouch 400, a portion of one side of the lead film 200 may be processed to increase in surface roughness. That is, in the lead film 200 having the three-layered structure, a portion of the metal adhesion layer 2003 that is in contact with the passage member 300 may be subjected to surface roughness treatment. Specifically, at least one of the pair of lead films 200 may be processed to increase in surface roughness of one surface of the metal adhesion layer 2003 facing the passage member 300. More specifically, at least one of the pair of lead films 200 may have surface roughness of a portion that overlaps the passage member 300 on one surface facing the passage member 300, which is greater than that a portion that is not in contact the passage member 300. Hereinafter, the portion that has been subjected to the surface roughness treatment to increase in surface roughness is referred to as a roughness treatment part 201.

As an example of a method for processing to increase in surface roughness, the portion of the lead film 200 facing the passage member 300 that overlaps the passage member 300 may be treated with plasma or primer. Here, the plasma treatment may mean that plasma is in contact with an object, and energy acts on the surface to change a shape of the surface. In addition, the primer treatment may mean that an object is treated with the primer. The plasma treatment or primer treatment are only examples of processing methods, and the surface may be processed by other methods. Particularly, other treatment methods that are capable of producing nanometer-level roughness may be used.

If the pressure inside the pouch 400 increases above the set pressure, the pouch cell 10 may be changed from a state of FIG. 3 to a state of FIG. 4. Referring to FIG. 4, the pressure inside the pouch 400 may increase above the set pressure to define a space between the lead film 200 and the passage member 300 of the pouch cell 10. The space may become the gas moving path 230 through which a gas moves.

When the gas moving path 230 is provided between the lead film 200 and the passage member 300, moisture may be permeated into the pouch 400 through the lead film 200. Here, hydrophobicity of the surface having relatively large surface roughness may increase to prevent the moisture from being permeated into the pouch 400 through the lead film 200. Thus, deterioration of a function of the pouch cell 10 or corrosion of the electrode lead 100 due to the moisture permeated into the pouch 400 may be prevented.

As an example of a degree to which the surface roughness increases, at least one of the pair of lead films 200 according to Embodiment 1 of the present invention may have a portion overlapping the passage member 300 on the surface facing the passage member 300, which has surface roughness R of 20 nm or more and 140 nm or less. A value of the surface roughness may be a value that facilitates the discharge of the gas and improves the hydrophobicity and may be a value obtained through experiment. In addition, the value of the surface roughness may be the easiest value to achieve the effect of the present invention.

The pouch cell 10 according to Embodiment 1 of the present invention may reduce a risk of venting by discharging the gas generated inside the pouch 400 to the outside when the pressure inside the pouch 400 increases. Here, the pouch cell 10 according to Embodiment 1 of the present invention may improve safety by preventing the moisture from being permeated into the pouch 400 through the gas moving path.

Hereinafter, detailed descriptions of the same configuration as that of the pouch cell 10 according to Embodiment 1 of the present invention will be omitted.

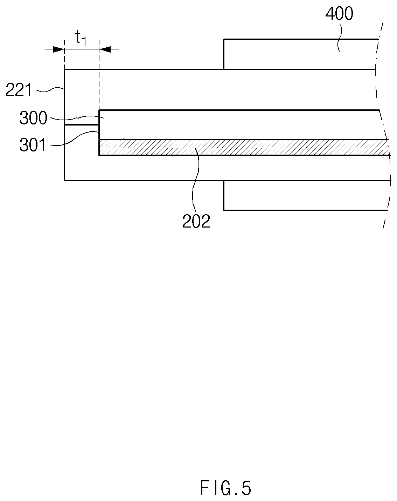

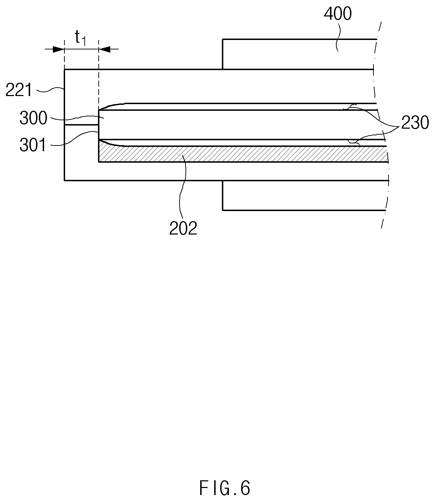

FIG. 5 is a schematic cross-sectional view of a pouch cell 10, taken along A-A' of FIG. 2 according to Embodiment 2 of the present invention, and FIG. 6 is a schematic cross-sectional view of the pouch cell 10, which is provided with a gas moving path and taken along A-A' of FIG. 2 according to Embodiment 2 of the present invention.

As an example of a configuration to prevent moisture, etc. from being permeated into the pouch 400, a lead film 200 of the pouch cell 10 according to Embodiment 2 of the present invention may be coated with a fluorine-based resin. Specifically, a portion of at least one of the pair of lead films 200 that overlaps a passage member 300 on one surface facing the passage member 300 may be coated with the fluorine-based resin. More specifically, one surface of a metal adhesion layer 2003 on an outer portion 220 of the lead film 200 facing the passage member 300 may be coated with the fluorine-based resin. Hereinafter, the portion coated with the fluorine-based resin is referred to as a fluorine resin coating part 202.

If the pressure inside the pouch 400 increases above the set pressure, the pouch cell 10 may be changed from a state of FIG. 5 to a state of FIG. 6. Referring to FIG. 6, the pressure inside the pouch 400 may increase above the set pressure to define a space between the lead film 200 and the passage member 300 of the pouch cell 10. The space may become the gas moving path 230 through which a gas moves.

When the gas moving path 230 is provided between the lead film 200 and the passage member 300, moisture may be permeated into the pouch 400 through the gas lead film 200. Here, hydrophobicity of the surface coated with the fluorine-based resin may increase to prevent the moisture from being permeated into the pouch 400 through the lead film 200. Thus, deterioration of a function of the pouch cell 10 or corrosion of the electrode lead 100 due to the moisture permeated into the pouch 400 may be prevented.

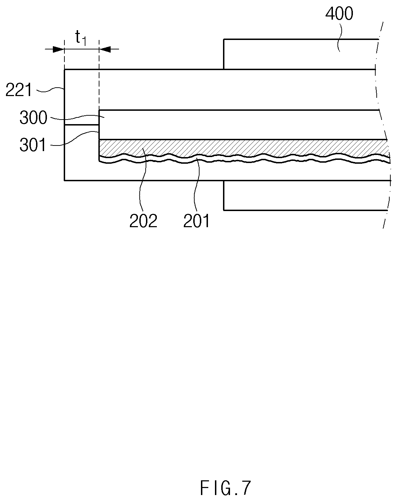

FIG. 7 is a schematic cross-sectional view of a pouch cell 10, taken along A-A' of FIG. 2 according to Embodiment 3 of the present invention.

As an example of a configuration to more efficiently prevent moisture, etc. from being permeated into the pouch 400, a lead film 200 of the pouch cell 10 according to Embodiment 3 of the present invention may be coated with a fluorine-based resin after being processed to increase in surface roughness. Specifically, a portion of at least one of the pair of lead films 200 that overlaps a passage member 300 on one surface facing the passage member 300 may be coated with the fluorine-based resin after being processed to increase in surface roughness. More specifically, one surface of a metal adhesion layer 2003 on an outer portion 220 of the lead film 200 facing the passage member 300 may be coated with the fluorine-based resin after being processed to increase in surface roughness.

Referring to FIG. 7, a fluorine resin coating part 202 may be provided on a roughness treatment part 201 of the lead film 200 at a portion facing the passage member 300. That is, the lead film 200 may be manufactured through a manufacturing process in which a portion of one surface is treated in roughened, and then a fluorine-based resin is applied on the portion.

Since one surface of the lead film 200 becomes more hydrophobic when both the surface roughening treatment and the fluorine-based resin treatment are performed, the permeation of moisture, etc. into the inside of the pouch 400 may be more effectively reduced.

The lead film 200 may be manufactured through the manufacturing process in which a portion of one surface is coated with the fluorine-based resin, and then the portion is treated in roughness. That is, the positions of the roughness treatment part 201 and the fluorine resin coating part 202 may be variable.

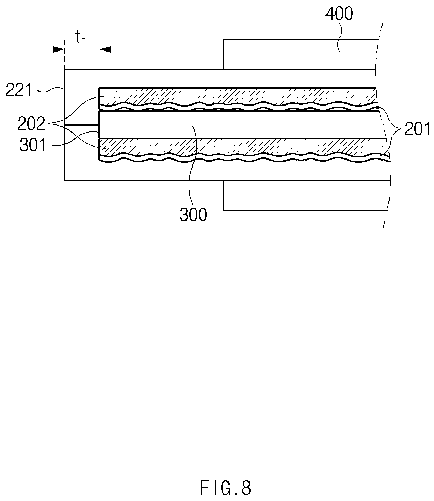

FIG. 8 is a schematic cross-sectional view of a pouch cell 10, taken along A-A' of FIG. 2 according to Embodiment 4 of the present invention.

Referring to FIG. 8, in one lead film of the pair of lead films 200, a portion overlapping the passage member 300 on one surface facing the passage member 300 may be coated with the fluorine-based resin after being processed to increase in surface roughness. In addition, in the other lead film of the pair of lead films 200, a portion overlapping the passage member 300 on one surface facing the passage member 300 is processed to increase in surface roughness after being processed to increase in surface roughness.

The positions at which the roughness treatment part 201 and the fluorine resin coating part 202 are disposed at both sides of the passage member 300 may be the same or different. FIG. 8 is a view illustrating a case in which the positions at which a roughness treatment part 201 and a fluorine resin coating part 202 are disposed at both sides of a passage member 300 are different from each other.

In the pouch cell 10 according to Embodiment 4 of the present invention, hydrophobicity of both sides of the passage member 300 may increase. Therefore, when a pressure inside the pouch 400 is greater than a set pressure, moisture, etc. may be more efficiently prevented from permeated through a gas moving path 230 provided at each of both sides of the passage member 300.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

10: Pouch cell
100: Electrode lead
200: Lead film
201: Roughness treatment part
202: Fluorine resin coating part
210: Central portion
220: Outer portion
230: Gas moving path
300: Passage member
400: Pouch
500: Electrode assembly

## Claims

1. A pouch cell comprising:
an electrode assembly;
a pouch configured to accommodate the electrode assembly;
an electrode lead electrically connected to the electrode assembly to protrude to the outside of the pouch;
a pair of lead films comprising a central portion, which covers a portion of the electrode lead on each of both surfaces of the electrode lead, and an outer portion disposed on each of both sides of the central portion so that the pouch and the electrode lead are insulated from each other; and
a passage member disposed between the pair of lead films and attached to the outer portion, wherein, when a pressure inside the pouch increases above a set pressure, a gas moving path is provided between the passage member and each of the lead films.

2. The pouch cell of claim 1, wherein the pouch is configured to cover a portion of the lead film and a portion of the passage member.

3. The pouch cell of claim 1, wherein one end of the lead film in a width direction is spaced an interval from the pouch, and
the passage member is disposed to be spaced an interval from the one end.

4. The pouch cell of claim 1, wherein the passage member is disposed to be spaced apart from the electrode lead.

5. The pouch cell of claim 1, wherein the passage member is disposed to be spaced an interval from each of both ends in a longitudinal direction of the lead film.

6. The pouch cell of claim 1, wherein a cross-sectional area of a portion at which the outer portion overlaps the passage member is 10% or more to 90% or less of a cross-sectional area of the outer portion.

7. The pouch cell of claim 1, wherein at least one of the pair of lead films is coated with a fluorine-based resin at a portion overlapping the passage member on one surface facing the passage member.

8. The pouch cell of claim 1, wherein at least one of the pair of lead films is coated with a fluorine-based resin at a portion overlapping the passage member on one surface facing the passage member, and
surface roughness of the portion overlapping the passage member is greater than that of a portion that is not in contact with the passage member.

9. The pouch cell of claim 8, wherein a portion overlapping the passage member is plasma-treated or primer-treated so that the surface roughness is greater than that of the portion that is not in contact with the passage member.

10. The pouch cell of claim 1, wherein at least one of the pair of lead films has surface roughness (R) of 20 nm or more and 140 nm or less at a portion overlapping the passage member on one surface facing the passage member.

11. The pouch cell of claim 9, wherein at least one of the pair of lead films has a surface having surface roughness (R) of 20 nm or more and 140 nm or less, which is coated with a fluorine-based resin.

12. The pouch cell of claim 1, wherein the passage member comprises a fluorine-based resin.

13. The pouch cell of claim 12, wherein the fluorine-based resin comprises polytetrafluoroethylene (PTFE).
